# EUROPÄISCHE PATENTANMELDUNG

(11) **EP 4 206 831 A1**
(43) Veröffentlichungstag der Anmeldung: **05.07.2023**
(21) Anmeldenummer: 21218157.2
(22) Anmeldetag: 29.12.2021
(51) Int. Cl.: G05B 9/03

(54) **VERFAHREN UND SYSTEM ZUR BEREITSTELLUNG VON ZEITKRITISCHEN STEUERUNGSANWENDUNGEN**

(71) Anmelder: Siemens Aktiengesellschaft, 80333 München (DE)
(72) Erfinder: Götz, Franz-Josef, 91180 Heideck (DE); Schiekofer, Rainer, 90475 Nürnberg (DE)
(74) Vertreter: Siemens Patent Attorneys

(57) **Zusammenfassung**

Zeitkritische Steuerungsanwendungen werden mittels Ablaufsteuerungskomponenten (113, 123, 133) bereitgestellt, die jeweils in eine mittels einer Server-Einrichtung (101-103) gebildete Ablaufsteuerungsumgebung (112, 122, 132) ladbar und dort ausführbar sind. Die Steuerungsanwendungen ermitteln aus periodisch erfassten Mess- und/oder Zustandsgrößen (12) jeweils periodisch Stellgrößen (11) für einen zu steuernden oder zu regelnden Prozess. Mehrere zueinander redundante Ablaufsteuerungskomponenten (113, 123, 133) werden parallel zueinander ausgeführt. Die zueinander redundanten Ablaufsteuerungskomponenten (113, 123, 133) ermitteln die Stellgrößen (11) für einen jeweiligen Prozesszyklus, der auf einen jeweiligen Erfassungszeitpunkt der Mess- und/oder Zustandsgrößen (12) folgt, sobald eine Mehrheit der zueinander redundanten Ablaufsteuerungskomponenten ein fehlerfreies Vorliegen der Mess- und/oder Zustandsgrößen für den jeweiligen Erfassungszeitpunkt signalisiert. Alternativ oder zusätzlich werden die ermittelten Stellgrößen unter Einschluss einer dem jeweiligen Prozesszyklus zugeordneten Sequenznummer an Aktoren (320) und/oder Steuerungseinheiten (31-32) übermittelt.

## Beschreibung

Die vorliegende Erfindung betrifft ein Verfahren zur Bereitstellung von zeitkritischer Steuerungsanwendungen, insbesondere Steuerungsanwendungen in einem industriellen Automatisierungssystem, sowie ein System, das zur Durchführung des Verfahrens geeignet ist.

Ein industrielles Automatisierungssystem umfasst üblicherweise eine Vielzahl von über ein industrielles Kommunikationsnetz miteinander vernetzten Automatisierungsgeräten und dient im Rahmen einer Fertigungs- oder Prozessautomatisierung zur Steuerung oder Regelung von Anlagen, Maschinen bzw. Geräten. Aufgrund zeitkritischer Rahmenbedingungen in industriellen Automatisierungssystemen werden zur Kommunikation zwischen Automatisierungsgeräten überwiegend Echtzeit-Kommunikationsprotokolle, wie PROFINET, PROFIBUS, Real-Time-Ethernet oder Time-Sensitive Networking (TSN), verwendet.

Aufgrund einer Nutzung für häufig äußerst unterschiedliche Anwendungen können in Ethernet-basierten Kommunikationsnetzen beispielsweise Probleme entstehen, wenn Netzressourcen für eine Übermittlung von Datenströmen oder von Datenrahmen mit Echtzeitanforderungen konkurrierend für eine Übermittlung von Datenrahmen mit großem Nutzdateninhalt ohne spezielle Dienstgüteanforderungen beansprucht werden. Dies kann dazu führen, dass Datenströme oder Datenrahmen mit Echtzeitanforderungen nicht entsprechend einer angeforderten bzw. benötigten Dienstgüte übermittelt werden.

In WO 2019/001718 A1 ist ein Verfahren zur Datenübermittlung beschrieben, das eine Kombination von geschützter Kommunikation und geringem Netzwerk-Konfigurationsaufwand ermöglicht. Dabei werden bei einer Reservierung von Ressourcen zur Übermittlung von Datenströmen (Streams) von einem Sender zu einem Empfänger zumindest zwei zumindest abschnittsweise redundante Pfade reserviert. Durch Erweiterung eines Reservierungsprotokolls wird eine automatische Konfiguration von Duplikatefiltern an redundanten Pfadabschnitten zugeordneten Netzknoten während einer Ressourcenreservierung vorgenommen.

Aus EP 3 674 824 A1 ist bekannt, dass für Datenströme, die auf Endgeräten ablaufenden ausgewählten Steuerungsanwendungen zugeordnet sind, jeweils ein individuelles Zeitfenster innerhalb vorgegebener Zeitintervalle spezifiziert wird. Die Zeitfenster weisen jeweils eine individuelle Zyklusdauer auf, die ein Vielfaches einer allgemeinen Zyklusdauer ist oder der allgemeinen Zyklusdauer entspricht. Erste bzw. zweite Kommunikationsgeräte überprüfen für die ausgewählten Steuerungsanwendungen jeweils, ob ein spezifiziertes Zeitfenster zur Datenübermittlung verfügbar ist. Bei einem verfügbaren Zeitfenster wird jeweils eine Information über einen Beginn des Zeitfensters innerhalb der vorgegebenen Zeitintervalle an das Endgerät übermittelt, auf dem die jeweilige ausgewählte Steuerungsanwendung abläuft. Datenströme, die ausgewählten Steuerungsanwendungen zugeordnet sind, werden jeweils entsprechend der Information über den Beginn des individuellen Zeitfensters übermittelt.

In industriellen Automatisierungssystemen werden Steuerungsanwendungen üblicherweise in Echtzeitsystemen, wie speicherprogrammierbaren Steuerungen, ausgeführt, damit ein deterministischer Ablauf der Steuerungsanwendungen sichergestellt werden kann. Im Rahmen eines Programmzyklus werden zunächst aus einer gesteuerten bzw. geregelten Prozess Mess- bzw. Zustandsgrößen als Eingangssignale abgefragt. Dann erfolgt durch die Steuerungsanwendungen auf Basis der abgefragten Eingangssignale eine Ermittlung von Stellgrößen als Ausgangssignalen. Schließlich werden die Ausgangssignale über idealerweise echtzeitfähige Kommunikationssystem an zu steuernde bzw. zu regelnde Geräte übermittelt.

In virtualisierten Steuerungssystemen oder Betriebssystemen ohne Echtzeit-Erweiterungen haben Steuerungsanwendungen jedoch keinen direkten Zugriff auf Hardware und Ablaufsteuerungsumgebung hat. Somit kann beispielsweise keine sofortige Ausführung von Steuerungsbefehlen erzwungen werden. Insbesondere ist es in virtualisierten Steuerungssystemen oder Betriebssystemen ohne Echtzeit-Erweiterungen möglich, dass eine hoch priorisierte Steuerungsanwendung von einer anderen Anwendung verdrängt bzw. verzögert ausgeführt wird. Dies kann beispielsweise dann vorkommen, wenn in einer virtualisierten Umgebung zwei Steuerungsanwendungen laufen, die gleichzeitig exklusiven Zugriff auf dieselbe Ressource anfordern.

Der vorliegenden Erfindung liegt die Aufgabe zugrunde, ein Verfahren zur Bereitstellung zeitkritischer Steuerungsanwendungen innerhalb von Umgebungen zu schaffen, die per se keine Echtzeitfähigkeit aufweisen bzw, und eine geeignete Vorrichtung zur Durchführung des Verfahrens anzugeben.

Diese Aufgabe wird erfindungsgemäß durch ein Verfahren mit den in Anspruch 1 angegebenen Merkmalen und durch ein System mit den in Anspruch 16 angegebenen Merkmalen gelöst. Vorteilhafte Weiterbildungen sind in den abhängigen Ansprüchen angegeben.

Entsprechend dem erfindungsgemäßen Verfahren werden Steuerungsanwendungen mittels Ablaufsteuerungskomponenten bereitgestellt, die jeweils in eine mittels einer Server-Einrichtung gebildete Ablaufsteuerungsumgebung ladbar und dort ausführbar sind. Die Steuerungsanwendungen ermitteln aus periodisch erfassten Mess- bzw. Zustandsgrößen jeweils periodisch Stellgrößen für einen zu steuernden oder zu regelnden Prozess.

Die Ablaufsteuerungskomponenten sind vorzugsweise Software-Container, Java Bytecode oder auf Betriebssystemen ablaufenden Anwendungsprogramme, während die Ablaufsteuerungsumgebung eine Container-Laufzeitumgebung, wie eine Docker Engine, eine Java Virtual Machine oder ein Betriebssystem ohne Echtzeit-Erweiterungen sein kann. Grundsätzlich können für die Ablaufsteuerungskomponenten auch alternative Micro-Virtualisierungskonzepte, wie Snaps, verwendet werden. Dementsprechend kann die Ablaufsteuerungsumgebung auch einen Snap Core umfassen.

Vorzugsweise sind Software-Container jeweils dafür ausgestaltet und eingerichtet, von anderen Software-Containern oder Container-Gruppen isoliert innerhalb der Ablaufsteuerungsumgebung auf einem Host-Betriebssystem abzulaufen, das in der Server-Einrichtung installiert ist. Insbesondere nutzen die Software-Container jeweils gemeinsam mit anderen auf der Server-Einrichtung ablaufenden Software-Containern einen Kernel des Host-Betriebssystems der Server-Einrichtung.

Erfindungsgemäß werden mehrere zueinander redundante Ablaufsteuerungskomponenten parallel zueinander ausgeführt. Darüber hinaus ermitteln die zueinander redundanten Ablaufsteuerungskomponenten die Stellgrößen für einen jeweiligen Prozesszyklus, der auf einen jeweiligen Erfassungszeitpunkt der Mess- bzw. Zustandsgrößen folgt, sobald eine Mehrheit der zueinander redundanten Ablaufsteuerungskomponenten ein fehlerfreies Vorliegen der Mess- bzw. Zustandsgrößen für den jeweiligen Erfassungszeitpunkt signalisiert. Alternativ oder zusätzlich übermitteln die zueinander redundanten Ablaufsteuerungskomponenten die ermittelten Stellgrößen unter Einschluss einer dem jeweiligen Prozesszyklus zugeordneten Sequenznummer an Aktoren bzw. Steuerungseinheiten. Vorzugsweise identifizieren die Aktoren bzw. Steuerungseinheiten anhand der Sequenznummern Duplikate der übermittelten Stellgrößen und filtern diese dementsprechend.

Die vorliegende Erfindung ermöglicht eine Ausführung von zeitkritischen Steuerungsanwendungen in Ablaufsteuerungsumgebungen, die selbst Echtzeitfähigkeit aufweisen, und zwar durch obige Koordination zueinander redundanter Ablaufsteuerungskomponente bzw. durch eine koordinierte, redundante Übermittlung der ermittelten Stellgrößen. Dadurch kann übliche IT-Infrastruktur verwendet werden, um Steuerungsaufgabe zu lösen, die üblicherweise Echtzeitfähigkeit erfordern. Eine besonders hohe Verfügbarkeit ergibt sich, wenn die zueinander redundanten Ablaufsteuerungskomponenten die Stellgrößen über disjunkte Pfade an die Aktoren bzw. Steuerungseinheiten übermitteln bzw. wenn bei dem die Stellgrößen jeweils an zueinander redundante Steuerungseinheiten übermittelt werden.

Entsprechend einer besonders bevorzugten Ausführungsform abonnieren die zueinander redundanten Ablaufsteuerungskomponenten jeweils einheitlich Datenströme mit den periodisch erfassten Mess- bzw. Zustandsgrößen. Auf diese Weise kann sichergestellt werden, dass die zueinander redundanten Ablaufsteuerungskomponenten mit einem konsistenten Prozessabbild arbeiten. Vorzugsweise werden die Datenströme mit den periodisch erfassten Mess- bzw. Zustandsgrößen durch jeweilige Datenquellen bzw. Sensoren jeweils mittels Datenstrom-Ankündigungen bekannt gemacht und an eine Multicast-Adresse gesendet, die den jeweiligen Datenstrom abonnierenden Ablaufsteuerungskomponenten zugeordnet ist.

Vorteilhafterweise werden die Mess- bzw. Zustandsgrößen unter Einschluss einer dem jeweiligen Erfassungszeitpunkt zugeordneten Sequenznummer an die zueinander redundanten Ablaufsteuerungskomponenten gesendet. Dabei übermitteln die zueinander redundanten Ablaufsteuerungskomponenten die ermittelten Stellgrößen mittels Datenströmen an die Aktoren bzw. Steuerungseinheiten. Insbesondere werden zum Senden der Mess- bzw. Zustandsgrößen für den jeweiligen Erfassungszeitpunkt dieselben Sequenznummern verwendet wie zur Übermittlung der ermittelten Stellgrößen für den jeweiligen Prozesszyklus, der auf den jeweiligen Erfassungszeitpunkt der Mess- bzw. Zustandsgrößen folgt. Auf diese Weise können stochastische Eigenschaften von verteilten Systemen in Kombination mit Kommunikationssystemfunktionen zur deterministischen und redundanten Übermittlung von Datenströmen effizient genutzt, um einen stochastischen Determinismus für die Steuerungsanwendungen zu ermöglichen.

Für eine Übermittlung der Datenströme werden vorzugsweise Dienstgüteanforderungen spezifiziert. Entsprechend diesen Dienstgüteanforderungen werden in die Datenströme weiterleitenden Kommunikationsgeräten, beispielsweise Switches, Bridges oder Router, Ressourcen für die Übermittlung der Datenströme reserviert. Diese Ressourcen können bei ausreichender Verfügbarkeit in den die Datenströme weiterleitenden Kommunikationsgeräten reserviert werden und umfassen beispielsweise nutzbare Übertragungszeitfenster, Bandbreite, zugesicherte maximale Latenz, Queue-Anzahl, Queue-Cache bzw. Adress-Cache in Switches oder Bridges.

Entsprechend einer besonders bevorzugten Ausgestaltung der vorliegenden Erfindung sind die Kommunikationsgeräte, welche die Datenströme weiterleiten, über ein Time-sensitive Network, insbesondere entsprechend IEEE802.3, IEEE 802.1Q, IEEE 802.1AB, IEEE 802.1AS, IEEE 802.1BA bzw. IEEE 802.1CB, miteinander verbunden. Dementsprechend kann eine Weiterleitung der Datenströme mittels Frame Preemption, insbesondere gemäß IEEE 802.1Q, Time-Aware Shaper, insbesondere gemäß IEEE 802.1Q, Credit-Based Shaper, insbesondere gemäß IEEE 802.1Q, Burst Limiting Shaper, Peristaltic Shaper bzw. Priority-Based Shaper gesteuert werden. Auf diese Weise kann auf bewährte, zuverlässig zu implementierende Kommunikationssystemfunktionen zur deterministischen und redundanten Übermittlung von Datenströmen zurückgegriffen werden.

Die zueinander redundanten Ablaufsteuerungskomponenten signalisieren das fehlerfreie Vorliegen der Mess- bzw. Zustandsgrößen für den jeweiligen Erfassungszeitpunkt vorteilhafterweise jeweils mittels einer Bestätigungsmeldung an die übrigen redundanten Ablaufsteuerungskomponenten. Darüber hinaus wird bei einem verspäteten bzw. fehlerbehafteten Vorliegen der Mess- bzw. Zustandsgrößen in der Mehrheit der zueinander redundanten Ablaufsteuerungskomponenten ein Fehler signalisiert, bzw. es erfolgt eine erneute Übermittlung der zuletzt ermittelten Stellgrößen. Damit ist auch in Fehlerfällen ein definiertes Systemverhalten sichergestellt. Verspätet liegen die Mess- bzw. Zustandsgrößen beispielsweise vor, wenn sie nicht innerhalb einer zulässigen Latenz ab dem jeweiligen Erfassungszeitpunkt durch die Ablaufsteuerungskomponenten empfangen werden.

Das erfindungsgemäße System zur Bereitstellung von zeitkritischen Steuerungsanwendungen ist zur Durchführung eines Verfahrens entsprechend vorangehenden Ausführungen geeignet und umfasst mehrere Server-Einrichtungen, mehrere mittels der Server-Einrichtungen gebildete Ablaufsteuerungsumgebungen sowie mehrere Ablaufsteuerungskomponenten zur Bereitstellung der Steuerungsanwendungen. Die Ablaufsteuerungskomponenten sind jeweils in eine mittels einer Server-Einrichtung gebildete Ablaufsteuerungsumgebung ladbar und dort ausführbar. Dabei sind die Steuerungsanwendungen dafür eingerichtet und ausgestaltet, aus periodisch erfassten Mess- bzw. Zustandsgrößen jeweils periodisch Stellgrößen für einen zu steuernden oder zu regelnden Prozess zu ermitteln.

Die Ablaufsteuerungskomponenten des erfindungsgemäßen Systems sind dafür eingerichtet und ausgestaltet, als zueinander redundante Ablaufsteuerungskomponenten parallel zueinander ausgeführt zu werden. Darüber hinaus sind die Ablaufsteuerungskomponenten dafür eingerichtet und ausgestaltet, als zueinander redundante Ablaufsteuerungskomponenten die Stellgrößen für einen jeweiligen Prozesszyklus zu ermitteln, der auf einen jeweiligen Erfassungszeitpunkt der Mess- bzw. Zustandsgrößen folgt, sobald eine Mehrheit der zueinander redundanten Ablaufsteuerungskomponenten ein fehlerfreies Vorliegen der Mess- bzw. Zustandsgrößen für den jeweiligen Erfassungszeitpunkt signalisiert, bzw. die ermittelten Stellgrößen unter Einschluss einer dem jeweiligen Prozesszyklus zugeordneten Sequenznummer an Aktoren bzw. Steuerungseinheiten zu übermitteln.

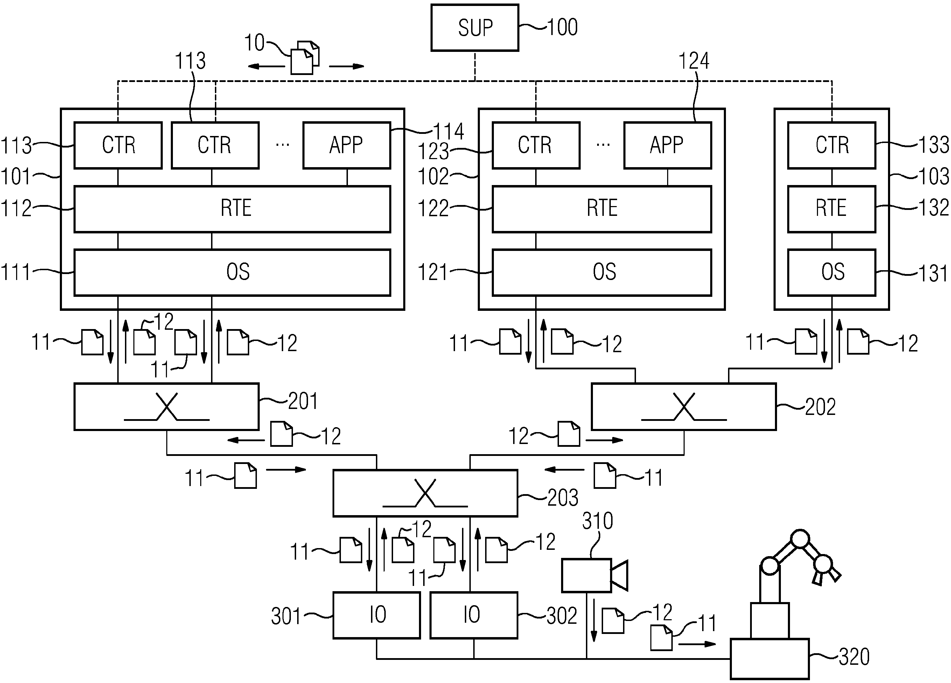

Die vorliegende Erfindung wird nachfolgend an einem Ausführungsbeispiel anhand der Zeichnung näher erläutert. Es zeigt die
- Figur: ein System zur Bereitstellung von zeitkritischen Steuerungsanwendungen.

Das in der Figur dargestellte System umfasst mehrere Server-Einrichtung 101-103 zur Bereitstellung von Steuerungsanwendungen eines industriellen Automatisierungssystems. Die Steuerungsanwendungen des industriellen Automatisierungssystems sind exemplarisch für zeitkritische Dienste und können auch Überwachungsfunktionen umfassen. Die Server-Einrichtungen 101-103 sind im vorliegenden Ausführungsbeispiel über ein mehrere Switche 201-203 umfassendes Kommunikationsnetz mit zwei zueinander redundanten Eingabe/Ausgabe-Einheiten 301-302 verbunden, die als Steuerungseinheiten für angeschlossene Sensoren und Aktoren dienen. Beispielsweise können an die Eingabe/Ausgabe-Einheiten 301-302 ein Kamerasystem 310 als Sensor und eine durch o.g. Steuerungsanwendungen gesteuerte Maschine als Aktor angeschlossen sein.

Die Switche 201-203 sind insbesondere zur Weiterleitung von Datenströmen über ein Time-sensitive Network entsprechend IEEE802.3, IEEE 802.1Q, IEEE 802.1AB, IEEE 802.1AS, IEEE 802.1BA und IEEE 802.1CB ausgestaltet. Dabei kann die Weiterleitung der Datenströme beispielsweise mittels Frame Preemption gemäß IEEE 802.1Q, Time-Aware Shaper gemäß IEEE 802.1Q, Credit-Based Shaper gemäß IEEE 802.1Q, Burst Limiting Shaper, Peristaltic Shaper bzw. Priority-Based Shaper gesteuert werden.

Die Server-Einrichtungen 101-103 können mittels der Steuerungsanwendungen beispielsweise Funktionen von Steuerungsgeräten eines industriellen Automatisierungssystems, wie speicherprogrammierbaren Steuerungen, implementieren. Auf diese Weise können die Server-Einrichtung 101-103 insbesondere für einen Austausch von Steuerungs- und Messgrößen mit durch die Server-Einrichtungen 101-103 gesteuerten Maschinen oder Vorrichtungen genutzt werden. Dabei können die Server-Einrichtungen 101-103 aus erfassten Mess- oder beobachteten Zustandsgrößen geeignete Stellgrößen für die Maschinen oder Vorrichtungen ermitteln.

Alternativ oder zusätzlich können die Server-Einrichtung 101-103 mittels der Steuerungsanwendungen Funktionen von Bedien- und Beobachtungsstationen implementieren und somit zur Visualisierung von Prozessdaten bzw. Mess- und Steuerungsgrößen genutzt werden, die durch Automatisierungsgeräte verarbeitet bzw. erfasst werden. Insbesondere können die Server-Einrichtungen 101-103 zur Anzeige von Werten eines Regelungskreises und zur Veränderung von Regelungsparametern oder -programmen verwendet werden.

In der Server-Einrichtungen 101-103 werden die Steuerungsanwendungen werden jeweils mittels Ablaufsteuerungskomponenten 113, 123, 133 bereitgestellt, die in eine mittels der jeweiligen Server-Einrichtung 101-103 gebildete Ablaufsteuerungsumgebung 112, 122, 132 ladbar und dort ausführbar sind. Die Ablaufsteuerungsumgebungen 112, 122, 132 sind jeweils als Anwendung auf einem Host-Betriebssystem 111, 121, 131 der jeweiligen Server-Einrichtung 101-103 installiert. Darüber hinaus können innerhalb der Ablaufsteuerungsumgebungen auch Ablaufsteuerungskomponenten 114, 124 für zeitunkritische Anwendungsprogramme ausgeführt werden.

Im vorliegenden Ausführungsbeispiel sind bzw. umfassen die Ablaufsteuerungskomponenten 113-114, 123-124, 133 Software-Container, die jeweils von anderen Software-Containern, Container-Gruppen bzw. Pods isoliert innerhalb der Ablaufsteuerungsumgebungen 112, 122, 132 auf dem jeweiligen Host-Betriebssystem 111, 121, 131 ablaufen. Dabei nutzen die Software-Container jeweils gemeinsam mit anderen auf der jeweiligen Server-Einrichtung 101-103 ablaufenden Software-Containern einen Kernel des jeweiligen Host-Betriebssystems 111, 121, 131. Die Ablaufsteuerungsumgebungen 112, 122, 132 sind vorzugsweise Container-Laufzeitumgebungen bzw. Container-Engines. Entsprechend alternativen Ausführungsformen können die Ablaufsteuerungskomponenten 113-114, 123-124, 133 Java Bytecode oder auf Betriebssystemen ablaufenden Anwendungsprogramme umfassen, während die Ablaufsteuerungsumgebungen 112, 122, 132 in diesem Fall jeweils eine Java Virtual Machine oder ein Betriebssystem ohne Echtzeit-Erweiterungen sind.

Eine Isolation der Ablaufsteuerungskomponenten bzw. eine Isolation von ausgewählten Betriebssystemmitteln untereinander kann insbesondere mittels Control Groups und Namespacing realisiert werden. Mittels Control Groups lassen sich Prozessgruppen definieren, um verfügbare Ressourcen für ausgewählte Gruppen zu beschränken. Über Namespaces können einzelne Prozesse oder Control Groups gegenüber anderen Prozessen oder Control Groups isoliert bzw. verborgen werden.

Die Steuerungsanwendungen ermitteln aus periodisch erfassten Mess- bzw. Zustandsgrößen 12 jeweils periodisch Stellgrößen 11 für einen zu steuernden oder zu regelnden Prozess. Hierzu werden mehrere zueinander redundante Ablaufsteuerungskomponenten 113, 123, 133 parallel zueinander ausgeführt. Die zueinander redundanten Ablaufsteuerungskomponenten 113, 123, 133 abonnieren im vorliegenden Ausführungsbeispiel jeweils einheitlich Datenströme mit den periodisch erfassten Mess- bzw. Zustandsgrößen 12, die insbesondere vom Kamerasystem 310 stammen können. Die Datenströme mit den periodisch erfassten Mess- bzw. Zustandsgrößen werden durch jeweilige Datenquellen bzw. Sensoren 310 jeweils mittels Datenstrom-Ankündigungen, z.B. Talker Advertise, bekannt gemacht und an eine Multicast-Adresse gesendet, die den jeweiligen Datenstrom abonnierenden Ablaufsteuerungskomponenten 113, 123, 133 zugeordnet ist.

Für eine Übermittlung der Datenströme können insbesondere Talker- bzw. Listener-seitig Dienstgüteanforderungen spezifiziert werden, so dass in die Datenströme weiterleitenden Kommunikationsgeräten, wie den Switches 201-203, entsprechend den Dienstgüteanforderungen Ressourcen für die Übermittlung der Datenströme reserviert werden. Dies setzt voraus, dass in den die Datenströme weiterleitenden Kommunikationsgeräten ausreichende Ressourcen verfügbar sind. Dabei umfassen die Ressourcen beispielsweise nutzbare Übertragungszeitfenster, Bandbreite, zugesicherte maximale Latenz, Queue-Anzahl, Queue-Cache bzw. Adress-Cache in Switches oder Bridges umfassen.

Die zueinander redundanten Ablaufsteuerungskomponenten 113, 123, 133 ermitteln die Stellgrößen 11 für einen jeweiligen Prozesszyklus, der auf einen jeweiligen Erfassungszeitpunkt der Mess- bzw. Zustandsgrößen 12 folgt, sobald eine Mehrheit der zueinander redundanten Ablaufsteuerungskomponenten ein fehlerfreies Vorliegen der Mess- bzw. Zustandsgrößen 12 für den jeweiligen Erfassungszeitpunkt signalisiert. Im vorliegenden Ausführungsbeispiel signalisieren die zueinander redundanten Ablaufsteuerungskomponenten 113, 123, 133 das fehlerfreie Vorliegen der Mess- bzw. Zustandsgrößen 12 für den jeweiligen Erfassungszeitpunkt jeweils mittels einer Bestätigungsmeldung 10 an die übrigen redundanten Ablaufsteuerungskomponenten.

Bei einem verspäteten oder fehlerbehafteten Vorliegen der Mess- bzw. Zustandsgrößen 12 in der Mehrheit der zueinander redundanten Ablaufsteuerungskomponenten 113, 123, 133 kann ein Fehler signalisiert werden bzw. eine erneute Übermittlung der zuletzt ermittelten Stellgrößen 11 erfolgen. Verspätet liegen die Mess- bzw. Zustandsgrößen vor, wenn sie nicht innerhalb einer zulässigen Latenz ab dem jeweiligen Erfassungszeitpunkt durch die Ablaufsteuerungskomponenten empfangen werden.

Alternativ oder zusätzlich übermitteln die zueinander redundanten Ablaufsteuerungskomponenten 113, 123, 133 die ermittelten Stellgrößen 11 unter Einschluss einer dem jeweiligen Prozesszyklus zugeordneten Sequenznummer an Aktoren 320 bzw. Steuerungseinheiten 31-32. Dies kann insbesondere unabhängig davon erfolgen, ob bzw. wann die Mess- bzw. Zustandsgrößen 12 für den jeweiligen Erfassungszeitpunkt in der Mehrheit der zueinander redundanten Ablaufsteuerungskomponenten 113, 123, 133 fehlerfrei vorliegen. Anhand der Sequenznummern können die Aktoren 320 bzw. Steuerungseinheiten 31-32 Duplikate der übermittelten Stellgrößen 11 identifizieren und filtern. Eine solche Duplikatefilterung kann auch durch die Switches 201-203 nach einer Weiterleitung der Stellgrößen 11 über abschnittsweise disjunkte Pfade erfolgen.

Vorzugsweise werden die Mess- bzw. Zustandsgrößen 12 unter Einschluss einer dem jeweiligen Erfassungszeitpunkt zugeordneten Sequenznummer mittels der abonnierten Datenströme an die zueinander redundanten Ablaufsteuerungskomponenten 113, 123, 133 gesendet. Korrespondierend dazu übermitteln die zueinander redundanten Ablaufsteuerungskomponenten 113, 123, 133 die ermittelten Stellgrößen 11 mittels Datenströmen an die Aktoren 320 bzw. Steuerungseinheiten 31-32. Dabei werden zum Senden der Mess- bzw. Zustandsgrößen 12 für den jeweiligen Erfassungszeitpunkt dieselben Sequenznummern verwendet werden wie zur Übermittlung der ermittelten Stellgrößen 11 für den jeweiligen Prozesszyklus, der auf den jeweiligen Erfassungszeitpunkt der Mess- bzw. Zustandsgrößen 12 folgt.

Zur Duplikatefilterung kann auf Basis einer maximalen Varianz von Frame- bzw. Paket-Laufzeiten bei einer Übermittlung der Stellgrößen 11 eine Größe bzw. Tiefe eines Duplikatefilters festgelegt werden. Zusätzlich kann eine minimale Intervall-Länge berücksichtigt werden, mit der die Mess- bzw. Zustandsgrößen 12 periodisch durch die jeweilige Datenquellen bzw. Sensoren 310 gesendet werden. Eine Varianz aus minimalen und maximalen Laufzeiten über Duplikate von Stellgrößen 11, die von zueinander redundanten Ablaufsteuerungskomponenten 113, 123, 133 werden, lässt sich an Verknüpfungspunkten, beispielsweise an den Switches 201-203, relativ problemlos bestimmen. Insbesondere können in deterministischen Kommunikationsnetzen an den Verknüpfungspunkten Merging Points Funktionen zur Jitter-Minimierung genutzt werden. Durch gezielte Verzögerungen bei der Übermittlung der Stellgrößen 11 oder der Mess- bzw. Zustandsgrößen 12 kann ein reduzierter Jitter erzielt werden.

Entsprechend einer besonders bevorzugten Ausführungsvariante ist zur Nutzung von redundanter Datenübermittlung, asynchroner Kommunikation, Diagnose von verteilten Systemen und zur Koordination der zueinander redundanten Ablaufsteuerungskomponenten 113, 123, 133 ein Supervisor 100 vorgesehen. Mittels des Supervisors können beispielsweise redundante Ablaufsteuerungskomponenten hinzugefügt oder entfernt werden. Ein Entfernen von Ablaufsteuerungskomponenten aus einem Cluster redundanter Ablaufsteuerungskomponenten bietet sich insbesondere dann an, wenn eine Ablaufsteuerungskomponente benötigte Mess- bzw. Zustandsgrößen verspätet empfängt bzw. verarbeitet. Auf diese Weise können Latenzen und Jitter reduziert werden.

## Patentansprüche

1. Verfahren zur Bereitstellung von zeitkritischen Steuerungsanwendungen, bei dem
- die Steuerungsanwendungen mittels Ablaufsteuerungskomponenten (113, 123, 133) bereitgestellt werden, die jeweils in eine mittels einer Server-Einrichtung (101-103) gebildete Ablaufsteuerungsumgebung (112, 122, 132) ladbar und dort ausführbar sind,
- die Steuerungsanwendungen aus periodisch erfassten Mess- und/oder Zustandsgrößen (12) jeweils periodisch Stellgrößen (11) für einen zu steuernden oder zu regelnden Prozess ermitteln,
- mehrere zueinander redundante Ablaufsteuerungskomponenten (113, 123, 133) parallel zueinander ausgeführt werden,
- die zueinander redundanten Ablaufsteuerungskomponenten (113, 123, 133) die Stellgrößen (11) für einen jeweiligen Prozesszyklus ermitteln, der auf einen jeweiligen Erfassungszeitpunkt der Mess- und/oder Zustandsgrößen (12) folgt, sobald eine Mehrheit der zueinander redundanten Ablaufsteuerungskomponenten ein fehlerfreies Vorliegen der Mess- und/oder Zustandsgrößen für den jeweiligen Erfassungszeitpunkt signalisiert, und/oder die ermittelten Stellgrößen unter Einschluss einer dem jeweiligen Prozesszyklus zugeordneten Sequenznummer an Aktoren (320) und/oder Steuerungseinheiten (31-32) übermitteln.

2. Verfahren nach Anspruch 1,
bei dem die Aktoren (320) und/oder Steuerungseinheiten (31-32) anhand der Sequenznummern Duplikate der übermittelten Stellgrößen (11) identifizieren und filtern.

3. Verfahren nach einem der Ansprüche 1 oder 2,
bei dem die zueinander redundanten Ablaufsteuerungskomponenten (113, 123, 133) jeweils einheitlich Datenströme mit den periodisch erfassten Mess- und/oder Zustandsgrößen (12) abonnieren.

4. Verfahren nach Anspruch 3,
bei dem die Datenströme mit den periodisch erfassten Mess- und/oder Zustandsgrößen (12) durch jeweilige Datenquellen und/oder Sensoren (310) jeweils mittels Datenstrom-Ankündigungen bekannt gemacht und an eine Multicast-Adresse gesendet werden, die den jeweiligen Datenstrom abonnierenden Ablaufsteuerungskomponenten zugeordnet ist.

5. Verfahren nach einem der Ansprüche 3 oder 4,
bei dem die Mess- und/oder Zustandsgrößen unter Einschluss einer dem jeweiligen Erfassungszeitpunkt zugeordneten Sequenznummer an die zueinander redundanten Ablaufsteuerungskomponenten gesendet werden, bei dem die zueinander redundanten Ablaufsteuerungskomponenten die ermittelten Stellgrößen mittels Datenströmen an die Aktoren und/oder Steuerungseinheiten übermitteln und bei dem zum Senden der Mess- und/oder Zustandsgrößen für den jeweiligen Erfassungszeitpunkt dieselben Sequenznummern verwendet werden wie zur Übermittlung der ermittelten Stellgrößen für den jeweiligen Prozesszyklus, der auf den jeweiligen Erfassungszeitpunkt der Mess- und/oder Zustandsgrößen folgt.

6. Verfahren nach einem der Ansprüche 3 bis 5,
bei dem für eine Übermittlung der Datenströme Dienstgüteanforderungen spezifiziert werden und bei dem in die Datenströme weiterleitenden Kommunikationsgeräten entsprechend den Dienstgüteanforderungen Ressourcen für die Übermittlung der Datenströme reserviert werden.

7. Verfahren nach Anspruch 6,
bei dem die Ressourcen bei ausreichender Verfügbarkeit in den die Datenströme weiterleitenden Kommunikationsgeräten reserviert werden und bei dem die Ressourcen nutzbare Übertragungszeitfenster, Bandbreite, zugesicherte maximale Latenz, Queue-Anzahl, Queue-Cache und/oder Adress-Cache in Switches oder Bridges umfassen.

8. Verfahren nach einem der Ansprüche 6 oder 7,
bei dem die die Datenströme weiterleitenden Kommunikationsgeräte (201-202) über ein Time-sensitive Network, insbesondere entsprechend IEEE802.3, IEEE 802.1Q, IEEE 802.1AB, IEEE 802.1AS, IEEE 802.1BA und/oder IEEE 802.1CB, miteinander verbunden sind.

9. Verfahren nach Anspruch 8,
bei dem eine Weiterleitung der Datenströme mittels Frame Preemption, insbesondere gemäß IEEE 802.1Q, Time-Aware Shaper, insbesondere gemäß IEEE 802.1Q, Credit-Based Shaper, insbesondere gemäß IEEE 802.1Q, Burst Limiting Shaper, Peristaltic Shaper und/oder Priority-Based Shaper gesteuert wird.

10. Verfahren nach einem der Ansprüche 1 bis 9,
bei dem die Ablaufsteuerungskomponenten Software-Container, Java Bytecode oder auf Betriebssystemen ablaufenden Anwendungsprogramme sind und bei dem die Ablaufsteuerungsumgebung eine Container-Laufzeitumgebung, eine Java Virtual Machine oder ein Betriebssystem ohne Echtzeit-Erweiterungen ist.

11. Verfahren nach einem der Ansprüche 1 bis 10,
bei dem die zueinander redundanten Ablaufsteuerungskomponenten die Stellgrößen über disjunkte Pfade an die Aktoren und/oder Steuerungseinheiten übermitteln.

12. Verfahren nach einem der Ansprüche 1 bis 11,
bei dem die Stellgrößen jeweils an zueinander redundante Steuerungseinheiten übermittelt werden.

13. Verfahren nach einem der Ansprüche 1 bis 12,
bei dem die zueinander redundanten Ablaufsteuerungskomponenten (113, 123, 133) das fehlerfreie Vorliegen der Mess- und/oder Zustandsgrößen für den jeweiligen Erfassungszeitpunkt jeweils mittels einer Bestätigungsmeldung (10) an die übrigen redundanten Ablaufsteuerungskomponenten signalisieren.

14. Verfahren nach einem der Ansprüche 1 bis 13,
bei dem bei einem verspäteten und/oder fehlerbehafteten Vorliegen der Mess- und/oder Zustandsgrößen in der Mehrheit der zueinander redundanten Ablaufsteuerungskomponenten ein Fehler signalisiert wird und/oder eine erneute Übermittlung der zuletzt ermittelten Stellgrößen erfolgt.

15. Verfahren nach Anspruch 14,
bei dem die Mess- und/oder Zustandsgrößen verspätet vorliegen, wenn sie nicht innerhalb einer zulässigen Latenz ab dem jeweiligen Erfassungszeitpunkt durch die Ablaufsteuerungskomponenten empfangen werden.

16. System zur Bereitstellung von zeitkritischen Steuerungsanwendungen mit
- mehreren Server-Einrichtungen (101-103),
- mehreren mittels der Server-Einrichtungen (101-103) gebildeten Ablaufsteuerungsumgebungen (112, 122, 132),
- mehreren Ablaufsteuerungskomponenten (113, 123, 133) zur Bereitstellung der Steuerungsanwendungen, wobei die Ablaufsteuerungskomponenten jeweils in eine mittels einer Server-Einrichtung (101-103) gebildete Ablaufsteuerungsumgebung (112, 122, 132) ladbar und dort ausführbar sind,
- wobei die Steuerungsanwendungen dafür eingerichtet und ausgestaltet sind, aus periodisch erfassten Mess- und/oder Zustandsgrößen (12) jeweils periodisch Stellgrößen (11) für einen zu steuernden oder zu regelnden Prozess zu ermitteln,
- wobei die Ablaufsteuerungskomponenten dafür eingerichtet und ausgestaltet sind, als zueinander redundante Ablaufsteuerungskomponenten parallel zueinander ausgeführt zu werden,
- wobei die Ablaufsteuerungskomponenten dafür eingerichtet und ausgestaltet sind, als zueinander redundante Ablaufsteuerungskomponenten die Stellgrößen für einen jeweiligen Prozesszyklus zu ermitteln, der auf einen jeweiligen Erfassungszeitpunkt der Mess- und/oder Zustandsgrößen folgt, sobald eine Mehrheit der zueinander redundanten Ablaufsteuerungskomponenten ein fehlerfreies Vorliegen der Mess- und/oder Zustandsgrößen für den jeweiligen Erfassungszeitpunkt signalisiert, und/oder die ermittelten Stellgrößen unter Einschluss einer dem jeweiligen Prozesszyklus zugeordneten Sequenznummer an Aktoren und/oder Steuerungseinheiten zu übermitteln.
